# EUROPEAN PATENT APPLICATION

(11) **EP 3 540 662 A1**
(43) Date of publication of application: **18.09.2019**
(21) Application number: 18161922.2
(22) Date of filing: 15.03.2018
(51) Int. Cl.: G06Q 10/08, G06Q 50/28, G06Q 50/04

(54) **COMPUTER IMPLEMENTED METHOD FOR SUPPLY CHAIN MANAGEMENT AND PROVENANCE IN A DATA PROCESSING NETWORK**

(71) Applicant: Deutsche Telekom AG, 53113 Bonn (DE); Technische Universität Berlin, 10623 Berlin (DE)
(72) Inventor: WESTERKAMP, Martin, 10439 Berlin (DE); VICTOR, Friedhelm, 10435 Berlin (DE)
(74) Representative: Vossius & Partner Patentanwälte Rechtsanwälte mbB

(57) **Abstract**

A computer-implemented method for supply chain provenance in a data processing network, wherein the network has at least one physical node and the network is configured to perform at least one blockchain process; wherein the blockchain process is configured to process digital tokens by means of at least one smart contract, wherein tokens correspond to at least one unit of a good and a batch of goods in the supply chain; wherein every token is uniquely identifiable; and wherein the method comprises executing a specific one of the at least one smart contract for every production step of the supply chain.

## Description

The present invention relates to the field of industrial production. In particular, the invention relates to a method of supply chain provenance. Furthermore, the invention is a computer implemented invention and relates to a corresponding apparatus, computer program, and computer-readable medium.

During the past years, blockchain technology has seen increasing awareness and popularity. Apart from using it as a cryptocurrency, many other use cases have been proposed. These include automated governance, identity management, and financial products [3]. One frequently proposed scenario is using blockchain technology for supply chain management [4], [5], [6].

Providing traceability of goods from retailer to resource has become increasingly important in the past decade. The main drivers behind this development are manifold. Consumers have a larger interest in consuming goods that comply to certain ecological and ethical standards [1]. Global supply chains have become complex to a greater extend, hampering quality management in manufacturers' procurement [2]. Furthermore, regulations, international standardizations and increased consumer awareness imply novel requirements towards supply chain management systems that are hard to cope with.

Furthermore, in recent years, demands on supply chain traceability have increased due to growing consumer awareness as well as a business's internal quality requirements. Current traceability systems are often centralized, inhibiting multi-tier coverage. They also suffer from isolated data storage and lack information on product transformations.

The present invention provides a blockchain-based supply chain management system using smart contracts to tackle these shortcomings. Embodiments rely on the tokenization of physical goods, whereby a batch of goods is digitally represented as a non-fungible token. Preferred embodiments of the system are implemented for the Ethereum Virtual Machine. By allowing for token compositions that lead to the creation of new tokens, the manufacturing process of transforming input goods to a new product can be captured.

The approach enables product traceability across business partners. The evaluation reveals that the gas costs, which corresponds to storage resources and computational effort, are comparable to existing smart contract systems on the public Ethereum blockchain, which in turn leads to the conclusion that it is feasible to handle millions of supply chain transactions with a system according to the invention.

Major drivers for supply chain management use cases originate from typical blockchain characteristics such as decentralization, verifiability, and immutability of data as well as distributed trust that facilitate tackling shortcomings in current supply chain management systems, i.e. lacking trust between parties, isolated data storage and unsatisfactory standardization in communication and data formats [7], [6].

Apart from technical obstacles, regulations, international standardizations, and increased consumer awareness imply novel requirements towards supply chain management systems that are hard to cope with. For instance, the European Parliament postulates the traceability of food, requiring food suppliers and market actors to provide information about provenance of goods [8]. In addition, the ISO 9001:2015 standard instructs organizations to monitor identifiability and traceability of products and services.

To cope with these requirements, supply chain management system should ideally be operated by multiple business partners to trace a product's origin and its transformation process across multiple entities. However, traditional supply chain management systems are centrally operated by participants and are not capable of providing comprehensible provenance information.

The state of the art in tracing and tracking products throughout a supply chain is storing records of suppliers and customers in a centralized manner [11]. This information is shared among participating parties to achieve comprehensive insights on supply chain provenance [12]. In the context of supply chain management, traceability promotes following a good's path downwards to its origin while tracking refers to the upward operation, from raw materials to end products [1].

For storing, sharing and managing relevant information, a plethora of information systems is used in practice. Warehouse and transport management systems focus on internal warehouse operations while enterprise resource planning (ERP) systems include supplier management, reordering and billing [15]. Dedicated supply chain management software applications target forecasting future demands and fulfilling these from available suppliers [14].

As provenance information is retrieved from a next level tier, trust in the supplier or a third party is required as no global view on the supply chain is given. However, enabling multi-tier traceability is essential for decreasing risks caused by quality fluctuations in source products.

In order to share information about products, standardization of data formats is encouraged by adopting, for instance, electronic data interchange (EDI), web services or electronic business using XML (ebXML) [15], [16]. The introduction of novel identifier technologies such as RFID or QR codes enables projecting physical goods onto digital systems [17].

To ensure the coupling between physical goods and digital representations, identification mechanisms are fundamental. The ISO 28219:2017 standard defines guidelines for creating globally valid identifiers which are enforced by utilizing bar codes or two dimensional symbols such as QR codes or alternatively RFID tags for projecting physical goods onto digital systems. Identifiers either refer to single goods or product batches. Varying the batch size permits influencing the granularity to which products are traceable. To ensure a certain quality degree, Bechini at al. propose defining batches of goods which are linked to a multitude of quality features.

Nevertheless, these approaches are limited to non-modifiable goods and do not consider the production processes. Thus, it is neither possible to track a product after it has been processed, nor to trace an end-product's inputs towards its primary resources.

The ISO 9000:2000 standard proposes the implementation of Quality Management Systems (QMS) to ensure a target quality level along the supply chain [18]. However, QMS usually require a centralized service which is not capable of gaining significant market acceptance or quality of service. In addition, this approach requires trust in a single entity managing information. For this need, virtual organizations (VOs) build a common ground for sharing information in a trusted environment.

Participants may join a multitude of VOs, according to different trust levels or types of goods traded. While this approach may be satisfactory for managing product quality, building and maintaining VOs is not only costly but other participants may have contrary incentives and vulnerabilities [16], [7].

Point-to-point supply chain management systems require strong standardization in data formats and interfaces for interoperability [12]. To ensure a certain quality degree, Bechini et al. propose defining batches of goods which hold a multitude of quality features [12]. Varying the batch size permits influencing the granularity to which products are traceable.

In summary, traditional supply chain information systems are capable of uniquely identifying products, however, traceability is limited. This is mainly due to isolated data that reflects organizations' sourcing and sales. Tracing ingredients over multiple tiers would require shared data that is tamper proof while maintaining high accessibility.

Blockchains provide a distributed, shared state all participants agree on using a consensus algorithm. Their tamper proof characteristics facilitate the opportunity of introducing a global view on multi-tier supply chains. In practice, smart contracts are used for enforcing business logic, defining particular forms of tokens and so forth.

Smart contracts, as first proposed by Nick Szabo in 1994, are computer programs that can enforce rules without requiring a third party. In the Bitcoin blockchain, a basic version of smart contracts is implemented through the means of a scripting system that facilitates use cases like multiuser accounts (multi-signature wallets) and escrow services.

The main technology advancement of the Ethereum blockchain [19] is the introduction of a general purpose and turing complete smart contract system which is manifested in the Ethereum Virtual Machine (EVM). In the EVM, program code is executed by miners and other network participants who verify state changes.

A smart contract is typically written in a high level programming language, like Solidity or Viper, and compiled to bytecode. This bytecode can be deployed on the blockchain whereby an address is returned at which the smart contract's functions can be called. Execution requires sending a transaction to the contract's address, while specifying which function is to be executed with parameters.

These functions in turn can call other smart contracts if they have been programmed to do so. Computationally, intensive routines, however, are not suitable, as the execution has a cost attached to it. For each opcode that the EVM supports, a gas cost is defined in the Ethereum yellow paper [19], where the most expensive operation is permanently storing values on the blockchain.

A transaction therefore needs to contain a sufficient amount of gas in order to guarantee successful execution. The actual costs of a transaction depend on how much gas is needed, and a gas price a user is willing to spend for each unit of gas. The transaction costs spent by a user are awarded to the miner that includes the transaction into a new block, as he has to verify and execute the transaction.

While the EVM was originally designed for the Ehereum blockchain, several projects aim to port it to other ledgers. For instance, Counterparty adds a secondary computation layer to run EVM code on top of the Bitcoin network. Qtum supplies a Bitcoin fork implementing the EVM with the goal of abstracting from Ethereum's account based model in order to support Bitcoin like light clients.

Additionally, smart contracts for the EVM can also be run on a private, permissioned blockchain like Quorum or Hyperledger Burrow, removing the need to participate in a public environment.

As the creation of tokens is a major use case for Ethereum, a standard interface referred to as Ethereum Request for Comments 20 (ERC 20) has been proposed. Ethereum's most popular wallets such as Mist and Parity support tokens that implement this interface out of the box. By this means, all standard operations such as receiving balances and transferring tokens to other addresses are available in the wallet's GUI.

Furthermore, there are best practices and initiatives, like OpenZeppelin, which emphasize the use of secure operations. While the ERC20 standard assumes all available tokens to be created with the contract's deployment, a proposal for adding minting operations to the interface is actively discussed in the community and may be taken into account in the future.

In contrast to ERC20 tokens which cannot be distinguished, a non-fungible standard, ERC721, is proposed for handling deeds. The target is to create a standardized interface for creating and trading discrete tokens reflecting digital or physical goods. Consuming tokens or defining conditions for their generation is not included in the proposal, hampering its utilization for projecting production processes onto the blockchain.

Several blockchain-based solutions have been proposed in literature to overcome current obstacles in guaranteeing a certain product quality, compliance with labor and ecological standards or to counter fraud [12], [20], and [21]. While there are various approaches tackling supply chain traceability, they are mostly concerned with tracing single, non-modifiable goods [22], [23]. In fact, they target proving a good's authenticity and ownership via multiple hops. For instance, Kim and Laskowski present an ontology that promotes provenance in supply chains using the Ethereum blockchain [23].

A typical contract is implemented using Solidity and supports several typical supply chain operations such as produce and consume. Nevertheless, the definition of novel functions and properties in the contract is limited to a rigid type system and the production of new goods out of existing resources is not possible.

A common issue in supply chain traceability is the projection of physical goods onto a digital representation. Feng suggests a token representation that implies several benefits such as proving authenticity by attaching RFID chips or QR codes to link physical products with their digital counterparts on the blockchain [22]. It inherently allows for proving ownership and permits transferring it to another party [23]. Hereby, a good can be tracked from creation to retail. Toyoda et al. propose a blockchain-based post-retail supply chain system for anti counterfeits in which they utilize this linkage and enable tracing products after being sold in retail [10].

Reviewing the state of the art approaches for providing traceability in the supply chain unveils a major shortcoming for more complex use-cases. While they permit creating digital representations of physical goods which facilitate tracking across multiple entities, this connection is lost in case the product is processed.

In summary, traditional supply chain management systems are centralized, but decentralized databases and recent approaches utilizing blockchain technology are emerging. Current blockchain based solutions for supply chain traceability promote tracking goods over multiple steps by utilizing markers such as RFID and QR codes [7]. This linkage mechanism enables proving provenance for anti-counterfeit with regard to high value goods such as diamonds, medicine [9] or generally in the post-retail supply chain [10].

However, these approaches are limited to non-modifiable goods and do not consider the production processes. Thus, it is neither possible to track a product after it has been processed, nor to trace an end-product's inputs towards its primary resources. In contrast to existing solutions, the present invention relates to a representation mechanism for the convertibility of products.

US 2017/262862 A1 describes a method for managing and providing provenance of a product using blockchain technology. The association to the product of a unique product identifier is used as well as the optional association to the product of an anti-counterfeiting device also having a unique identifier as the product moves along the supply chain from its source phase, through the transformation phase and undergoes the transportation phase.

US 2016/164884 A1 relates to a provenance management system. The provenance management system can authenticate an entity account to register a public identity key and an identity address that are associated with the entity account. The provenance management system can receive a logistic transaction record having a cryptographic signature thereon. The provenance management system can authenticate the cryptographic signature against the public identity key and publish the logistic transaction record to a distributed consensus system that implements a block chain. Each block in the block chain are in sequence with one another and can contain one or more logistic transaction records to ensure a sequence of the logistic transaction records is cryptographically irrepudiable.

WO 2017/004527 A1 relates to an electronic resource tracking and storage computer system being provided that communicates with a distributed blockchain computing system that includes multiple computing nodes. The system includes a storage system, a transceiver, and a processing system. The storage system includes a resource repository and transaction repository that stores submitted blockchain transactions. A new resource issuance request is received, and a new resource is added to the resource repository in response. A new blockchain transaction is generated and published to the blockchain. In correspondence with publishing to the blockchain, the transaction storage is updated with information that makes up the blockchain transaction and some information that was not included as part of the blockchain transaction. The transaction storage is updated when the blockchain is determined to have validated the previously submitted blockchain transaction.

In this description the terms blockchain and distributed ledger are used as synonyms. The term distributed ledger is preferred, as it is the broader term. However, the term is more often used by the skilled person, as it is more intuitive. Whenever the term blockchain is used in the description it is also referred to a distributed ledger unless specifically stated otherwise or obvious to the skilled person.

It is an object of the present invention to overcome the above stated problems. A further object is to provide a method and computer implementation of said method that provides token transition in smart contracts for supply chain provenance. The objects are achieved by the features of the subject-matter of the independent claims. The dependent claims relate to further aspects of the invention.

In an aspect of the invention, a computer-implemented method for supply chain management and provenance in a data processing network is provided, wherein the supply chain has a plurality of types of goods, wherein the network has at least one physical node and the network is configured to have at least one distributed ledger instance having a smart contract functionality; wherein the distributed ledger instance has a corresponding smart contract for each type of good; wherein within the smart contract tokens correspond to at least one unit of a good and/or a batch of goods in the supply chain; wherein every token is non-fungible; and wherein the method comprises calling at least one function of the smart contract for every production step of the supply chain.

The method may further comprise at least one of the steps
a1) in a supplier role a client calling a creating function for a primary token,
   wherein for calling the creating function no input token is required and
   wherein a supplier upon creation in the distributed ledger becomes the owner of the primary token, and
a2) in a supplier role a client calling a handle function for a primary token.

In this description the term client in addition to the common definition, in particular refers to a node of a network, a program on a node of a network, and/or a program accessing a network via a node of a network.

The method may further comprise at least one of the steps
b1) in a producer role a client calling a produce function,
   wherein calling the produce function requires a predetermined set of input token;
   wherein the produce function creates a secondary token;
   wherein the input token is at least one of a primary token and a secondary token; and
   wherein the producer upon creation in the distributed ledger becomes the owner of the secondary token;
b2) in a producer role a client calling a consume function for consuming at least one of a primary token and a secondary token;
b3) in a producer role a client calling a handle function for at least one of a primary token and a secondary token; and
wherein the predetermined set of input token is stored in the smart contract and/or a certificate for at least one input token of the predetermined set of input token is stored in the smart contract.

The method according may, further comprise the step
c) in a handling role a client calling at least one of
   c1) a splitting function for in the distributed ledger splitting at least one of a primary token and a secondary token,
   c2) a merging function for in the distributed ledger merging at least one of a primary token and a secondary token, and
   c3) a transfer function for in the distributed ledger transferring at least one of a primary token and a secondary token from a first entity to a second entity.

In this description to term handling role is used to describe a logistics role and/or a retailer role.

The method according may further comprise the step
d) in a consumer role a client calling a consume function for consuming at least one of a primary token and a secondary token,
wherein the calling the consume function represents an end point of the supply chain.

The method may further comprise the step
e) in a certifier role introducing an ontology, which comprises the step of defining any one of the functions and/or smart contracts for steps a) to d) and/or the step of defining a certificate for at least one token.

The corresponding smart contracts may be turing complete contracts, preferably solidity contracts, deployable on a distributed ledger, preferably an Ethereum virtual machine.

When a function is called for storing in the distributed ledger a batch identifier, preferably 12 byte long, may be concatenated to a token contract address, preferably 20 byte long, and a single, preferably 32 byte long, write operation may be used.

For generating the unique batch identifiers, resources, sender address, and time may be hashed using a SHA-3 hash function or a counter.

The concatenation and a respective split operation may be implemented using in-line assembly.

Adding a new product to the supply chain may be conducted through a factory contract which is called, preferably using Ethereum's JavaScript API, and deploys a corresponding token contract on the distributed ledger.

According to the invention a data processing network for supply chain provenance is provided comprising at least one physical node, and wherein the network is configured have at least one distributed ledger instance having a smart contract functionality; wherein the supply chain has a plurality of types of goods, wherein the distributed ledger instance has a corresponding smart contract for each type of good; wherein within the smart contract tokens corresponds to at least one unit of a good and/or a batch of goods in the supply chain; wherein every token is non-fungible; and wherein the node is configured to perform the aforementioned method.

According to the invention a computer program is provided comprising instructions which, when the program is executed by a computer, cause the computer to carry out any one of the steps of the aforementioned method.

According to the invention a computer-readable medium is provided comprising instructions which, when executed by a computer, cause the computer to carry out any one of the steps of the aforementioned method.

It is a general aspect of the invention to track a transformation of physical goods in a production process. According to the invention a set of smart contracts is used to handle modifiable goods by capturing their creation, transformation, and trade on a distributed ledger. Tokens are used to represent an unit or batch of goods. Functions are called to represent actions performed on the goods. As a result, not only the good's origin is traceable but also the inputs into the good. Hereby, customers are empowered to review a product's quality and its ingredients' in various dimensions.

According to aspects of the invention a representation mechanism for the convertibility of products is provided. Instead of simply projecting physical goods onto the blockchain in the form of tokens, according to the present invention their transformation in the production process is documented on the ledger. Therefore a set of smart contracts that handles modifiable goods by capturing their creation, transformation and trade on a distributed ledger are used. As a result, not only the good's origin is traceable but also its inputs'. Hereby, two major requirements for supply chain management that conventional systems cannot deliver comprehensively are achieved. Firstly, customers are empowered to review a product's and its ingredients' quality in various dimensions such as environmental and labour standards. Secondly, in the context of quality management, the proposed system enables manufacturers to monitor the supply chain for multiple tiers rather than relying on information provided by suppliers.

The main features of the present invention are as follows: 1) A supply chain system that reflects the production process through token transition based on smart contracts and/or functions, preferably implemented for the Ethereum virtual machine. 2) An evaluation of an implementation with respect to smart contract execution costs and scalability with increasing numbers of participants.

### Brief description of the drawings

The above-described objects, advantages and features of the present invention, as well as others, will be more readily understood from the following detailed description of certain preferred embodiments of the invention, when considered in conjunction with the accompanying drawings in which:
- Fig. 1: shows an embodiment of the invention for a wood industry supply chain,
- Fig. 1a: shows an alternative representation of the embodiment of the invention of Fig. 1 for a wood industry supply chain,
- Fig. 2: shows a detail of an embodiment of the invention for a wood industry supply chain,
- Fig. 3a: shows the cost saving effect associated with embodiments of the invention, and
- Fig. 3b: shows a comparison of the cost for a traditional storing vs. a event-based storing according to embodiments of the invention.

### Detailed description of the drawings

In the following, embodiments of the invention will be described. It is noted that some aspects of any one of the described embodiment may also be found in some other embodiments unless otherwise stated or obvious to the skilled person. However, for increased intelligibility, each aspect will only be described in detail when first mentioned and any repeated description of the same aspect will be omitted.

One aspect of the invention relates to a blockchain-based, decentralized supply chain infrastructure that leverages smart contracts for the traceability and transformation of goods. The system relies on the tokenization of goods, whereby every batch of goods captured in the supply chain is digitally represented in the form of a token. Independent entities can participate in the system according to the invention; furthermore the invention is based on a shared database that cannot be tampered because a blockchain is utilized.

The invention is based on two key aspects: representing physical goods in the form of digital tokens, and recipes that enable their transformation. Combined with additional functionality like certifying goods, transferring, splitting and combining tokens, cross-business traceability is facilitated. The following subsections describe each of these aspects in detail and introduce the participant's roles based on specific embodiments.

### A. Tokenization of goods

For each type of good managed in the supply chain, a smart contract is set up. Within such a smart contract, tokens can be created that represent physical goods. One token corresponds to one batch of units that could be measured in items, weight, volume or size. The batch size is flexible, so that large quantities of goods, but also single entities are manageable. The tokens are non-fungible, meaning that each token is unique. This allows distinguishing between batches of tokens of the same type of good. To apply this aspect, after manufacturing or sourcing a batch of products in the physical world, the contract owner creates corresponding digital tokens.

### B. Recipes for good transformation

In order to digitize a manufacturing process, several tokens can be transformed into a new token. When creating a new smart contract, the product composition is defined. Comparable to a recipe, the creator specifies a number of input goods and corresponding amounts that are required for the creation a new product. Following the recipe, when a batch of goods is to be created, the owner of the contract needs to possess the required input goods in sufficient amounts. In fact, it is preferred that the specific batches of input tokens need to be specified, so that they can be consumed by the smart contract automatically. If a batch of units is not entirely used up, the remaining units are kept so that they can be used for future manufacturing. Only contract owners can generate token batches as a contract always corresponds to a specific producer's or supplier's product only s/he produces. However, token owners can split, merge, transfer and consume batches.

### C. Certified goods

Some goods are equally usable in a manufacturing process, because they are equal in type. They could also be equal in terms of compliance with standards indicating similar quality. However, the goods may originate from different sources. With the help of a certificate contract, multiple token contracts can be defined to be equal. This introduces an ontology for defining product inputs during industrial processing. The certificates can be used in place of a specific good when defining a recipe as part of a manufacturing process. Once a batch is to be created, the input tokens are checked on whether they conform to the certificate.

### D. Roles

A set of roles correspond to the actions a participant of the system can take. A user may act in a single, or multiple roles which will be described in detail below.

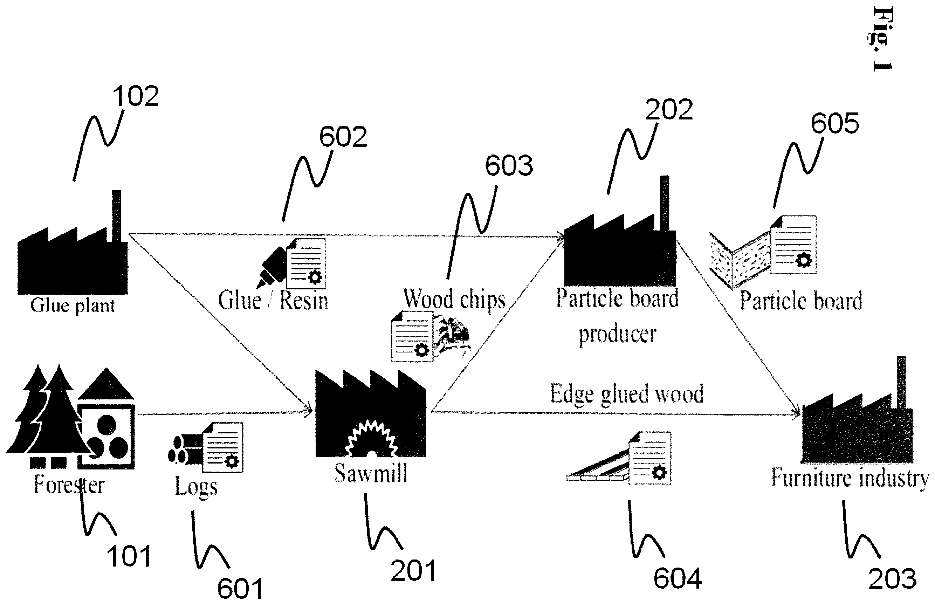

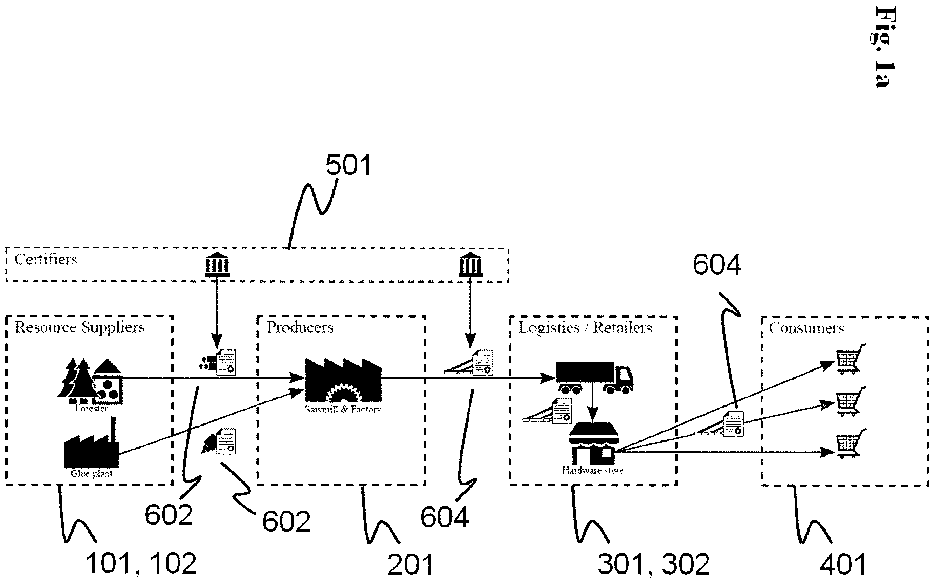

To illustrate the invention in the following embodiments are presented. The embodiments relate to a specific, but simplified supply chain as depicted in Figs. 1 and 1. However, it is to be understood that the invention is not limited thereto.

A forester 101 creates a batch of logs, which are then consumed by a sawmill 201. A resin plant 102 creates a batch of glue and/or resin, which is then consumed by the sawmill 201 and/or a particle board producer 202. The sawmill 201 can create edge glued wood whereby wood chips are created as a by-product. Together with the resin, the particle board producer 202 can create particle boards from wood chips. Both particle boards and edge glued wood can be used as raw materials in a furniture industry 203.

Figure 1 contains smart contract symbols 601, 602, 603, 604, 605 attached to every good, indicating that according to the invention a smart contract exists on a blockchain representing the respective good as a digital token. In fact, every participant of this supply chain has control over a set of smart contracts that represent the goods they can create.

Tokenization is a central inventive concept of the present invention. One token corresponds to a batch of goods, but preferably any batch size can be chosen. For example, when the forester 101 creates 100 logs, these 100 logs can be represented as one token, or 100 individual tokens.

In one embodiment of the invention every token is uniquely identifiable. The token according to the invention can be split, combined, and always have an owner. After creation, the forester 101 will own the token, but ownership can be transferred to another party, such as the sawmill 201. The sawmill 201 in turn can create new goods, if and only if, it has access to the required inputs, i.e. tokens. It therefore needs to own logs and glue if it wants to produce edge glued wood.

In words of an analogy, every good may have a recipe for creation that according to the invention is inscribed into a corresponding smart contract 601, 602, 603, 604, 605. The recipe's ingredients are the inputs it processes of the supply chain. Consuming a good during production results in the destruction of its digital representation, i.e. the token.

This constitutes a transformation process for the goods that the participants manage on the supply chain. Simultaneously, with every transformation process being logged on the blockchain, and every batch being unique, the method according to the invention permits tracing provenance beyond a good's creation, preferably including its inputs.

Further embodiments of the present invention relate to roles in the blockchain process which can be understood without reference to a specific supply chain embodiment.

In this description the terms action and function are used. Both terms are strongly interrelated and may be used synonymously. However, a action usually refers to an action in the supply chain and an function usually refers to an corresponding action in the distributed ledger.

In embodiments of the invention participants of the system may have different roles. Not all roles are present in all embodiments, but in general five distinct roles which perform four separate actions may be identified. Embodiments of the present invention relate to every selection of roles and actions from the following table:

**(Table 1: combination of roles and actions according to embodiments of the invention)**

| Role | Action | | | |
|---|---|---|---|---|
| | create | consume | handle (split/merge/transfer) | certify |
| Resource supplier | yes | | yes | |
| producer | yes | yes | yes | |
| Logistics/Retail Provider | | | yes | |
| Consumer | | yes | | |
| Certifier | | | | yes |

In other words, each role is associated with at least one action, preferably from the following list: create, consume, handle, and certify.

In a preferred embodiment a resource supplier is a role. The resource supplier may preferably be able to call the following functions create and handle., wherein the handle function is to be understood to be at least one of a split function, a merge function, and a transfer function.

In a preferred embodiment a producer is a role. The producer may preferably be able to call the following functions create, consume, and handle.

In a preferred embodiment a logistics/retail provider is a role, also referred to as handling role. The logistics/retail provider may preferably be able to call the function handle.

In a preferred embodiment a consumer is a role. The consumer may preferably be able to call the function consume.

In a preferred embodiment a certifier is a role. The certifier may preferably be able to call the function certify.

Further preferred embodiments relate to a combination of any number of the five last mentioned embodiments. Furthermore, additional roles may be created by means of combination of any number of aforementioned roles or actions.

In detail the roles of the preferred embodiments can be described as follows:
1) *Resource suppliers* produce resources without any direct input. When a forester is cutting trees for instance, several inputs, such as labor or gasoline for machines, are required. However, the inputs never become physical part of the resulting product. As every supply chain will only have a partial view of the real world, these resource suppliers must exist in embodiments of the invention. In the above described embodiment, the glue plant 102 is a resource supplier as it has no inputs, but in other embodiments the inputs of a resin plant may be modeled to originate from another entity. A resource supplier may split or merge batches, before they are transferred to other entities. In the described embodiments, the forester transfers batches of logs to the sawmill.
2) *Producers* in turn do require input goods for producing output goods. To represent this process on the blockchain, according to the invention, the processing industry entity first defines all the goods that are required to create a certain product. The input goods are acquired physically while capturing this process in smart contracts, preferably through token transfers. In a next step, the producer owns the input tokens which are required for the creation of a new token representing a produced physical product. For creating a product token, the producer provides information about all the goods used. These goods are then preferably automatically "consumed" when the corresponding smart contract is executed, meaning their input tokens are deleted, as their physical counterparts have transformed. In the described embodiments, the sawmill is a producer that acquires batches of logs as well as glue. To ensure that sufficient input tokens are present, the sawmill can merge batches. The sawmill is then able to produce a batch of edge glued wood, which it could split and transfer to logistics or retailers.
3) *Logistics and retailers* acquire tokens, but do not alter a good itself. For example, a batch of 100 units of edge-glued wood could be split, transferred to a logistics company and distributed to multiple hardware stores. If goods have been obtained by a wholesaler, merged goods could be transferred to other retailers. Individual customers could also keep ownership without consuming the item, in order to resell it to someone else. In corresponding embodiments, the customer is not strictly modeled as a consumer.
4) *Consumers* may receive and consume products. This process results in the representing token batch to be deleted as well, meaning it can no longer be used as part of the supply chain. Its provenance however, can still be verified. If the retail customer is not modeled as part of the supply chain, a hardware store may act as a consumer: it removes the token from the supply chain when the item has been sold. However, consumers can only conduct this operation if the token was received before which may not be the case in, for instance, brick and mortar retail stores. Another approach is allowing claiming ownership after a token has been marked sold. Sending a token to a contract that allows transfers it to a key owner facilitates such mechanism. Identifiers such as QR codes or RFID chips permit encoding keys for claiming a product.
5) *Certifiers* permit introducing an ontology for defining product inputs during industrial processing. With the ontology, a smart contract can distinguish between equal products of distinct providers. This allows for the use of abstractions in the product definition process. Therefore certifiers issue certificates of equality for multiple goods. They are responsible for guaranteeing quality, following certain product standards or labor safety requirements. In practical terms, a official standardization organization could act as such a certifier. In the described embodiments, the certifier verifies that logs coming from the forester meet certain quality guidelines. It doesn't own, create or handle any tokens itself. It is also possible however, that the sawmill creates its own certificate for equally usable goods. It can then utilize all products that have been certified to qualify to a certain level of similarity. The certifier also occupies the role of a standardization organization that is able to introduce a measure of equality for products.

In embodiments of the invention to ensure tracing capabilities, the creation of tokens is based on its physical production. The representation of the production process on the blockchain is ensured across multiple entities, as they cannot proceed without the correct inputs. Every step of the production process is accountable, and therefore traceability is not only provided for a single good, but also for its ingredients.

After receiving all inputs of the end-product, the process according to the invention is conducted iteratively on its inputs until the initial resource is reached. The resulting relationships follow a tree-like structure. To obtain a good's sources, all inputs must be received from the blockchain. As products are handled in batches, input information is available by batch.

Depending on the interval in which new blocks are added to the blockchain, the block creation timestamp informs about the time and date a given product has been manufactured at. As products are handled in batches, input information is available by batch. For example, referring to described embodiments embodiment a batch of edge glued wood could be traceable to a batch of 100 logs. In order to accomplish traceability for single goods, it should be declared as its own batch. However, fine-grained traceability comes with the cost of higher transaction counts.

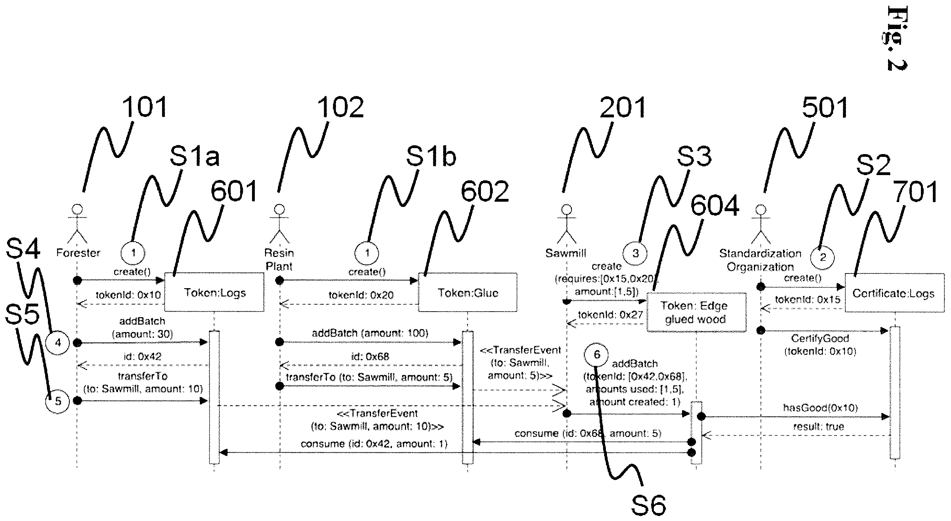

The embodiments of the present invention may be implemented based on different blockchains. A preferred embodiment relates to an implementation on an Ethereum Virtual Machine (EVM) which will be described with reference to Figure 2. However, it is understood that provided with a detailed description of the embodiments for an EVM the skilled person is able to exercise the invention on any blockchain. In particular, the invention is not limited to a specific blockchain.

To achieve the proposed traceability in supply chains according to the invention a set of solidity contracts which are deployable on any EVM compatible blockchain is used. However, as ERC 20 tokens are not distinguishable, they do not satisfy the initial requirement of identifiability.

Therefore, in embodiments of the invention it is preferred that a representation of product batches as structs is used, which hold certain characteristics such as the goods which have been consumed during the production process. By this means, each batch of products corresponds to one token that holds unique features.

Resource suppliers 101, 102 and producers 201, 202, 203 hold their own set of token contracts 601, 602, 603, 604, 605, one for each kind of products. To facilitate the deployment of novel token contracts, they may preferably utilize a factory contract. While a token contract's ownership always remains with the initial deployer, the batches may be traded and change owners.

In order to clarify embodiments of the invention Fig. 2 refers to a select subset of the processes of Figs. 1 and 1a for improved intelligibility, without limiting the scope of invention. Figure 2 has three entities 101, 102, 201, and 501 who operate along a supply chain in six steps S1 to S6.
1) A wood token contract 601 and a glue token 602 is created, via a create smart contract, that holds references to all produced batches of wood and glue, respectively, that were produced by the forester 101 and the resin plant 102. As these goods do not involve any direct inputs, no additional products are required to add a batch of wood or glue in the respective contract.
2) A certifier 501 approves the forester's log tokens 601 if the organization's measures apply. This step defines inputs for goods which need to comply certain standards. For instance, when the sawmill 201 creates a board token contract 604, it may want to guarantee a high level of wood quality for all boards produced. Instead of specifying a forester's wood contract, it is preferred that certificates are used.
3) The sawmill 201 defines two required inputs, first, any logs that are certified by the standardization organization 501 and second, the resin plant's 102 glue. Through this mechanism, the sawmill 201 is not bound to a single supplier but is enabled to either define a certificate to which consumed products need to comply or to directly specify a supplier's good.
4) To add a batch of logs, the forester 101 does not require any inputs, as the forester 101 acts in the role of a resource supplier. The created batch may be split thereafter, resulting in two or more new batches.
5) The created batch is sent to the sawmill 201 which is notified though an event triggered in the transfer contract function. The resin plant 102 preferably performs corresponding steps.
6) To add a batch of edge glued wood 604, the sawmill 201 needs to define the wood and glue used during production. The addbatch function first checks if the defined wood is certified by querying the standardization organization's 501 certificate contract. If the result is positive, the wood is consumed, i.e. the wood token's consume function is called, reducing the overall amount of wood the forester's wood contract holds. The consumption of tokens is only possible for owned token batches, which in the current embodiment is the case, as the forester 101 has transferred the ownership in step 5. As the glue token was defined directly without utilizing a certificate before, the token is reduced instantly.

In detail, as presented in Fig. 2, the first entities involved are resource suppliers, namely a forester 101 and resin plant 102 who produce and sell wood and glue, respectively. In step S1a a wood token contract is created that holds references to all produced batches of wood that were produced by said forester 101. In step S1b a resin token contract is created that holds references to all produced batches of glue that were produced by said resin plant 102. As these goods do not involve any direct inputs, no additional products are required to add a batch of wood or glue in the contract.

For instance, when a sawmill 201 creates a board token contract, the sawmill 201 may want to guarantee a high level of wood quality for all boards produced. Instead of specifying the forester's 101 wood contract, certificates can be used, as shown in step S3. The sawmill 201 defines two required inputs, first, any logs that are certified by the standardization organization 501 and second, the specific resin plant's 201 glue. Through this mechanism, the sawmill 201 is not bound to a single supplier, but is enabled to either define a certificate to which consumed products need to comply or to directly specify supplier's good.

After the forester 101 has added a batch of twenty units of wood in step S4, the batch is split and ten units are send to the sawmill 201 which is notified though an event triggered in the transfer contract function in step S5. The resin plant 102 performs corresponding steps.

To add a batch of edge glued wood, the sawmill 201 needs to define the wood and glue used during production. In step S6, the addbatch function first checks if the defined wood is certified by querying the standardization organization's 501 certificate contract. If the result is positive, the wood is consumed, i.e. the wood token's consume function is called, reducing the overall amount of wood the forester's 101 wood contract holds.

The consumption of tokens is only possible for owned token batches, which in Fig. 2 is the case, as the forester 101 has transferred the ownership in step S5. As the glue token was defined directly without utilizing a certificate before, the token is reduced instantly. By this means, finally the forester 101 holds twenty units of wood, the resin plant 102 owns fifty nine units of glue while the sawmill 201 holds nine units of wood, no glue and one unit of edge glued wood.

In an embodiment of the invention certifiers 501 preferably are able to deploy their own contracts that hold certificates for multiple goods which possess similar characteristics. Additionally or alternatively, these organizations could issue signed certificates which are added to a product's smart contract. This approach enables observers to receive all certificates a good holds without querying a third contract. However, the certifier's signature has to be verified, adding overhead. When storing certified products in a dedicated certificate contract, the certificate has to be known before querying for a specific product, while in the former approach this is not the case.

Furthermore, certificate contracts hold a second function for providing the ontology of products' similarity. Hereby, certificates are preferably declared as inputs for tokens rather than defining a specific good which would enforce a single supplier for sourcing.

For embodiments of the invention, preferably in the EVM, gas costs are assigned to each operation. Despite deploying new contracts, storing variables in the contract storage is the most expensive instruction [19]. To decrease operational costs, it is therefore desirable to minimize such costly procedures.

In a preferred embodiment, for generating unique batch identifiers, resources, sender address and time are hashed using a keccak256 hash function. In further preferred embodiments of the invention, for generating unique batch identifiers, resources, sender address and time are hashed using a SHA-3 hash function. While hashes bear the disadvantage of possible collusions, using a counter would require another storage operation every time a new batch is created. As the possibility of collusion within a single token contract with a byte length of 12 is in the measures of approximately 1:7:9*10¹⁸, this surprising effect can be used to decrease operational gas costs.

Where possible, it is preferred to use mappings using identifiers over the use of arrays. While this comes with the drawback of not being able to receive all items or iterating over those items, it also decreases gas costs as it is not necessary to iterate over an array to observe an item.

For embodiments of the invention, gas costs are assigned to each operation. Despite deploying new contracts, storing variables in the contract storage is typically the most expensive instruction. To decrease operational costs, it is therefore desirable to minimize such costly procedures. In one aspect of the invention events are used rather than storage in case the data is not accessed within the contract.

Furthermore, the word size in the EVM is 32 bytes so that storing smaller types still results in costs reflecting the full word size. While a solidity optimizer may merge for instance two 16 byte variables to store them in a single operation, this is mechanism is only capable of concatenating types with the size of 8 bytes or multiple of it. For that reason according to an aspect of the invention manual optimizations are conducted.

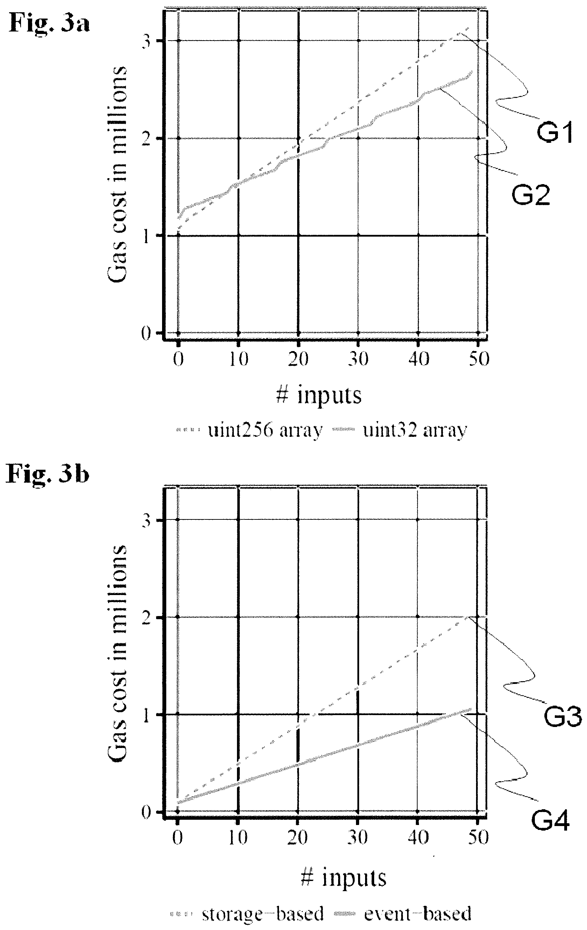

The cost saving effect is shown in Fig 3a. Using uint256 for storing input amounts results in a linear growth (G1) in gas costs with an increasing number of inputs. In contrast, when using uint32 (G2) a lower slope is observed but a step every eight inputs occurs. This is due to the fact that the optimizer concatenates up to eight variables in a single storage location before allocating a new one.

However, when storing only few variables, the overhead for merging variables in a single location exceeds its benefits. This mechanism is only capable of concatenating types with the size of 8 bytes or multiple of it. For that reason, according to the invention optimizations are conducted.

When storing requires inputs for creating tokens, the inputs' contract address is needed, batch identifiers and the amounts are needed to create one product unit. Contract addresses in Ethereum are 40 hexadecimal digits long and therefore require 20 bytes for storage. While usually the remaining 12 bytes are padded with zeros. According to the invention 12 byte long batch identifiers are used and concatenated with the corresponding contract added, resulting in a single 32 byte write operation.

The size of 24 hexadecimal digits provides sufficient space for storing unique identifiers and is derived from a keccak hash in the contract. The concatenation and respective split operations are preferably implemented using in-line assembly to provide a gas efficient calculation.

The use of smart contracts should be decoupled from user interaction. Adding a new product is therefore conducted through a factory contract which is preferably called using Ethereum's JavaScript API called web3 and deploys a corresponding token contract on the blockchain. Hereby, the maintainability is increased, as front-end applications do not need to handle the contract code and following migrations are deployable through the factory contract.

In one aspect of the invention the transparency in supply chains is increased. One embodiment of the invention comprises a web-based tool to track provenance and manage tokens.

Intuitively, batch inputs would be stored within their corresponding structs and pulled via getter methods. As provenance information is not queried by contracts but only required for analysis purposes, the token contract emits events rather than storing all information in order to decrease gas costs.

Declaring topics when emitting events enables filtering and searching for attributes but are more expensive than using a raw data format. Even though events are stored, they are reproducible, verifiable and easily observable due to the use of bloom filters for receiving relevant blocks in the blockchain [19].

According to the invention the emitted events for providing traceability of products are utilized by recursively querying the inputs that have been declared for the token's creation. As the contract enforces the consumption of these inputs, the real world production process is reflected. Respectively, receiving all inputs in a recursive manner results in a tree of production inputs and unveils all resources used.

For analyzing the involved costs, consuming gas as defined in Ethereum's yellow paper [19] is assumed. It is refrained from converting measured gas costs to Ethereum's native currency or conventional currencies due to the lack of expressiveness. Such conversions would not only be subject to fluctuating exchange rates but also varying gas costs which depend on various factors such as current blocks' gas use and waiting time until a transaction is mined. In addition, the embodiments of the invention are agnostic of the underlying blockchain and may be run for example in a permissioned manner.

For instance, when sending a transaction, a gas price has to be declared that competes with those of other transactions distributed in the network. As miners prefer high gas prices, choosing a low price may result in the transaction being rejected or long waiting times. Therefore, it is the sender's responsibility to choose an appropriate value, while such considerations underlay too many uncertainties to be included into a cost analysis.

It is differentiated between the costs for deploying contracts and running, i.e. transaction, costs. As participants create a contract for each sort of product they offer, deployment cost are only relevant for novel products. The actual deployment costs depend on the amount of inputs declared, as they have to be stored in the contract's storage. This information is required within the contract to ensure the right amount of goods has been consumed for creating a corresponding token, so that using events rather than storing the data is not applicable here. However, this is not the case for adding new batches.

For obtaining comprehensive traceability information, emitted events are preferably retrieved from a blockchain node using the web3 API. As this data is not required for smart contract operations, using events is sufficient so that transformation information is not stored within the contract, leading to decreased operational costs.

Figure 3 b) depicts a comparison of both approaches with respect to the amount of input goods. A significantly steeper increase in gas costs (G3) is observed when storing high amounts of inputs in comparison to emitting events (G4). While gas costs grow linearly with both approaches, a factor of 39,340 gas is observed for each added input in the classic storage approach (G3) but only 19,241 gas for using events (G4), so just about half of the former.

The base costs for deploying a contract with no input goods account for 92,756 gas. To picture more complex scenarios, product tokens with two inputs on multiple tiers have been created. Consequently, the resulting relationships can be represented as a binary tree with its height relating to the level of tiers tracked in a supply chain. Batches with multiple tiers have been created and the gas costs have been compared with a single batch that includes all inputs directly instead of using multiple tiers.

The resulting gas costs confirm the assumption that gas costs depend on the amount of vertices and edges in the sourcing tree. As a result, the overall gas costs do not depend on the amount of tiers considered in a supply chain but on the amount of sources. This allows precise cost estimations for maintaining a traceability system.

The proposed solution should be understood as a foundation for blockchain-based supply chain management systems that can be built upon. The invention anticipates the following features to be of interest:
a) Payment for goods: In the above embodiments, payments are not considered. It is questionable whether it would be desirable for a business to open its books on how much has been paid for the acquisition of inputs for a manufacturing process. If purchases were public however, inefficiencies of the market would be transparent and could be exploited.
b) Shrinkage: If a good is damaged or lost, the system currently has no suitable mechanism to capture such an event, other than letting the affected business simply consume the respective tokens in order to remove them from the supply chain.
c) Ownership vs. possession: It may be desirable to let a logistics firm possess goods, that are owned by another party. This may result in such a logistics firm suffering from shrinkage.
d) Packaging: There are scenarios in which goods may need to be packaged together, only to be extracted at a later stage. With the described embodiments, a packaging process can be implemented similarly to a manufacturing process, but the extraction of the original goods is not possible, which inhibits traceability.

What has been described and illustrated herein are embodiments of the invention along with some of variations. The terms, descriptions and figures used herein are set forth by way of illustration only and are not meant as limitations. Those skilled in the art will recognize that many variations are possible within the spirit and scope of the invention, which is intended to be defined by the following claims - and their equivalents- in which all terms are meant in their broadest reasonable sense unless otherwise indicated.

### References:

The following references are used in the description.
[1] F. Dabbene, et al., "Traceability issues in food supply chain management: A review," Biosystems Engineering, vol. 120, pp. 65- 80, 2014.
[2] J. Gualandris, R. D. Klassen, S. Vachon, and M. Kalchschmidt, "Sustainable evaluation and verification in supply chains: Aligning and leveraging accountability to stakeholders," Journal of Operations Management, vol. 38, pp. 1 - 13, 2015.
[3] A. Biryukov, et al. , "Findel: Secure derivative contracts for ethereum," in International Conference on Financial Cryptography and Data Security. Springer, 2017, pp. 453-467.
[4] F. Glaser, "Pervasive decentralisation of digital infrastructures: A framework for blockchain enabled system and use case analysis," in Proceedings of the 50th Hawaii International Conference on System Sciences, 2017.
[5] K. Wüst and A. Gervais, "Do you need a blockchain?" Cryptology ePrint Archive, Report 2017/375, 2017, https://eprint.iacr.org/2017/375.
[6] K. Korpela, et al., "Digital supply chain transformation toward blockchain integration," in Proceedings of the 50th Hawaii International Conference on System Sciences, 2017.
[7] S. A. Abeyratne and R. P. Monfared, "Blockchain ready manufacturing supply chain using distributed ledger," International Journal of Research in Engineering and Technology, vol. 05, no. 09, pp. 1-10, sep 2016. [Online]. Available: http://esatjournals.net/ijret/2016v05/i09/IJRET20160509001.pdf
[8] European Parliament, "Regulation (ec) no 178/2002 of the European parliament and of the council of 28 january 2002 laying down the general principles and requirements of food law, establishing the european food safety authority and laying down procedures in matters of food safety," 2002. [Online]. Available: http://eur -lex.europa.eu/legalcontent/EN/TXT/?qid=1488202332570 &uri=CELEX:32002R0178
[9] N. Hackius and M. Petersen, "Blockchain in logistics and supply chain : trick or treat?" in Proceedings of the Hamburg International Conference of Logistics (HICL), oct 2017. [Online]. Available: http://hdl.handle.net/11420/1447
[10] K. Toyoda, et al., "A novel blockchain-based product ownership management system (poms) for anti-counterfeits in the post supply chain," IEEE Access, vol. PP, no. 99, pp. 1-1, 2017.
[11] S. Appelhanz, et al., "Traceability system for capturing, processing and providing consumerrelevant information about wood products: system solution and its economic feasibility," Journal of Cleaner Production, vol. 110, pp. 132 - 148, 2016, special Volume: Improved resource efficiency and cascading utilisation of renewable materials. [Online]. Available: http://www.sciencedirect.com/science/article/pii/S095965261500147X
[12] A. Bechini, et al., "Patterns and technologies for enabling supply chain traceability through collaborative e-business," Information and Software Technology, vol. 50, no. 4, pp. 342 - 359, 2008. [Online]. Available: http://www.sciencedirect.com/science/article/pii/S0950584907000213
[14] P. Helo and B. Szekely, "Logistics information systems: An analysis of software solutions for supply chain coordination," Industrial Management & Data Systems, vol. 105, no. 1, pp. 5-18, 2005. [Online]. Available: https://doi.org/10.1108/02635570510575153
[15] A. Gunasekaran and E. Ngai, "Information systems in supply chain integration and management," European Journal of Operational Research, vol. 159, no. 2, pp. 269 - 295, 2004, supply Chain Management: Theory and Applications. [Online]. Available: http://www.sciencedirect.com/science/article/pii/S0377221703005186
[16] B. Roberts, et al., "Request Based Virtual Organisations (RBVO): An Implementation Scenario," in Collaborative Networks and Their Breeding Environments, L. M. Camarinha-Matos, H. Afsarmanesh, and A. Ortiz, Eds., 2005, pp. 17-24.
[17] C. Costa, et al., "A review on agri-food supply chain traceability by means of rfid technology," Food and Bioprocess Technology, vol. 6, no. 2, pp. 353-366, Feb 2013. [Online]. Available: https://doi.org/10.1007/s11947-012-0958-7
[18] R. Sroufe and S. Curkovic, "An examination of ISO 9000:2000 and supply chain quality assurance," Journal of Operations Management, vol. 26, no. 4, pp. 503 - 520, 2008, special Issue: Research in Supply Chain Quality. [Online]. Available: http://www.sciencedirect.com/science/article/pii/S0272696307000873
[19] G. Wood, "Ethereum: a secure decentralised generalised transaction ledger," Ethereum Project Yellow Paper, pp. 1-32, 2014.
[20] C. Van Dorp, "Tracking and tracing business cases: Incidents, accidents and opportunities," Proceedings of EFITA Conference, pp. 601-606, 2003.
[21] F. Tian, "A supply chain traceability system for food safety based on haccp, blockchain internet of things," in 2017 International Conference on Service Systems and Service Management, June 2017, pp. 1-6.
[22] "An agri-food supply chain traceability system for china based on RFID & blockchain technology," in 2016 13th International Conference on Service Systems and Service Management (ICSSSM), June 2016, pp. 1-6.
[23] H. M. Kim and M. Laskowski, "Towards an Ontology- Driven Blockchain Design for Supply Chain Provenance," SSRN Electronic Journal, August 2016. [Online]. Available: http://www.ssrn.com/abstract=2828369 http://arxiv.org/abs/1610.02922

## Claims

1. A computer-implemented method for supply chain management and provenance in a data processing network,
wherein the supply chain has a plurality of types of goods,
wherein the network has at least one physical node and the network is configured to have at least one distributed ledger instance having a smart contract functionality;
wherein the distributed ledger instance has a corresponding smart contract for each type of good;
wherein within the smart contract tokens correspond to at least one unit of a good and/or a batch of goods in the supply chain;
wherein every token is non-fungible; and
wherein the method comprises calling at least one function of the smart contract for every production step of the supply chain.

2. The method according to claim 1, further comprising at least one of the steps
a1) in a supplier role a client calling a creating function for a primary token,
wherein for calling the creating function no input token is required and
wherein a supplier upon creation in the distributed ledger becomes the owner of the primary token, and
a2) in a supplier role a client calling a handle function for a primary token.

3. The method according to claim 1 or 2, further comprising at least one of the steps
b1) in a producer role a client calling a produce function,
wherein calling the produce function requires a predetermined set of input token;
wherein the produce function creates a secondary token;
wherein the input token is at least one of a primary token and a secondary token; and
wherein the producer upon creation in the distributed ledger becomes the owner of the secondary token;
b2) in a producer role a client calling a consume function for consuming at least one of a primary token and a secondary token;
b3) in a producer role a client calling a handle function for at least one of a primary token and a secondary token; and
wherein the predetermined set of input token is stored in the smart contract and/or a certificate for at least one input token of the predetermined set of input token is stored in the smart contract.

4. The method according to any one of claims 1 to 3, further comprising the step
c) in a handling role a client calling at least one of
c1) a splitting function for in the distributed ledger splitting at least one of a primary token and a secondary token,
c2) a merging function for in the distributed ledger merging at least one of a primary token and a secondary token, and
c3) a transfer function for in the distributed ledger transferring at least one of a primary token and a secondary token from a first entity to a second entity.

5. The method according to any one of claims 1 to 4, further comprising the step
d) in a consumer role a client calling a consume function for consuming at least one of a primary token and a secondary token,
wherein the calling the consume function represents an end point of the supply chain.

6. The method according to any one of claims 1 to 5, further comprising the step e) in a certifier role introducing an ontology, which comprises the step of defining any one of the functions and/or the smart contracts for steps a) to d) and/or the step of defining a certificate for at least one token.

7. The method according to any one of claims 1 to 6, wherein the corresponding smart contracts are turing complete contracts, preferably solidity contracts, deployable on a distributed ledger, preferably an Ethereum virtual machine.

8. The method according to any one of claims 1 to 7, wherein when a function is called for storing in the distributed ledger a batch identifier, preferably 12 byte long, is concatenated to a token contract address, preferably 20 byte long, and a single, preferably 32 byte long, write operation is used.

9. The method according to claim 8, wherein for generating the unique batch identifiers, resources, sender address, and time are hashed using a SHA-3 hash function or a counter.

10. The method according to claim 8 or 9, wherein the concatenation and a respective split operation is implemented using in-line assembly.

11. The method according to any one of claims 8 to 10, wherein adding a new product to the supply chain is conducted through a factory contract which is called, preferably using Ethereum's JavaScript API, and deploys a corresponding token contract on the distributed ledger.

12. A data processing network for supply chain provenance comprising
at least one physical node, and wherein the network is configured have at least one distributed ledger instance having a smart contract functionality;
wherein the supply chain has a plurality of types of goods,
wherein the distributed ledger instance has a corresponding smart contract for each type of good;
wherein within the smart contract tokens corresponds to at least one unit of a good and/or a batch of goods in the supply chain;
wherein every token is non-fungible; and
wherein the node is configured to perform any one of the steps of any one of claims 1 to 11.

13. A computer program comprising instructions which, when the program is executed by a computer, cause the computer to carry out any one of the steps of any one of claims 1 to 11.

14. A computer-readable medium comprising instructions which, when executed by a computer, cause the computer to carry out any one of the steps of any one of claims 1 to 11.

## Amended claims

### Amended claims in accordance with Rule 137(2) EPC.

1. A computer-implemented method for supply chain management and provenance in a data processing network,
wherein the supply chain has a plurality of types of goods,
wherein the network has at least one physical node and the network is configured to have at least one distributed ledger instance having a smart contract functionality;
wherein the distributed ledger instance has a corresponding smart contract for each type of good;
wherein within the smart contract tokens correspond to at least one unit of a good and/or a batch of goods in the supply chain;
wherein every token is non-fungible; and
wherein a client is configured to operate in different roles,
wherein the method comprises the step of the client calling at least one function of the smart contract for every production step of the supply chain.

2. The method according to claim 1, further comprising at least one of the steps a1)
in a supplier role the client calling a creating function for a primary token,
wherein for calling the creating function no input token is required and
wherein a supplier upon creation in the distributed ledger becomes the owner of the primary token, and
a2) in a supplier role the client calling a handle function for a primary token.

3. The method according to claim 1 or 2, further comprising at least one of the steps
b1) in a producer role the client calling a produce function,
wherein calling the produce function requires a predetermined set of input token;
wherein the produce function creates a secondary token;
wherein the input token is at least one of a primary token and a secondary token; and
wherein the producer upon creation in the distributed ledger becomes the owner of the secondary token;
b2) in a producer role the client calling a consume function for consuming at least one of a primary token and a secondary token;
b3) in a producer role the client calling a handle function for at least one of a primary token and a secondary token; and
wherein the predetermined set of input token is stored in the smart contract and/or a certificate for at least one input token of the predetermined set of input token is stored in the smart contract.

4. The method according to any one of claims 1 to 3, further comprising the step
c) in a handling role the client calling at least one of
c1) a splitting function for in the distributed ledger splitting at least one of a primary token and a secondary token,
c2) a merging function for in the distributed ledger merging at least one of a primary token and a secondary token, and
c3) a transfer function for in the distributed ledger transferring at least one of a primary token and a secondary token from a first entity to a second entity.

5. The method according to any one of claims 1 to 4, further comprising the step
d) in a consumer role the client calling a consume function for consuming at least one of a primary token and a secondary token,
wherein the calling the consume function represents an end point of the supply chain.

6. The method according to any one of claims 1 to 5, further comprising the step
e) in a certifier role introducing an ontology, which comprises the step of defining any one of the functions and/or the smart contracts for steps a) to d) and/or the step of defining a certificate for at least one token.

7. The method according to any one of claims 1 to 6, wherein the corresponding smart contracts are turing complete contracts, preferably solidity contracts, deployable on a distributed ledger, preferably an Ethereum virtual machine.

8. The method according to any one of claims 1 to 7, wherein when a function is called for storing in the distributed ledger a batch identifier, preferably 12 byte long, is concatenated to a token contract address, preferably 20 byte long, and a single, preferably 32 byte long, write operation is used.

9. The method according to claim 8, wherein for generating the unique batch identifiers, resources, sender address, and time are hashed using a SHA-3 hash function or a counter.

10. The method according to claim 8 or 9, wherein the concatenation and a respective split operation is implemented using in-line assembly.

11. The method according to any one of claims 8 to 10, wherein adding a new product to the supply chain is conducted through a factory contract which is called, preferably using Ethereum's JavaScript API, and deploys a corresponding token contract on the distributed ledger.

12. A data processing network for supply chain provenance comprising
at least one physical node, and wherein the network is configured have at least one distributed ledger instance having a smart contract functionality;
wherein the supply chain has a plurality of types of goods,
wherein the distributed ledger instance has a corresponding smart contract for each type of good;
wherein within the smart contract tokens corresponds to at least one unit of a good and/or a batch of goods in the supply chain;
wherein every token is non-fungible; and
wherein the node is configured to perform any one of the steps of any one of claims 1 to 11.

13. A computer program comprising instructions which, when the program is executed by a computer, cause the computer to carry out any one of the steps of any one of claims 1 to 11.

14. A computer-readable medium comprising instructions which, when executed by a computer, cause the computer to carry out any one of the steps of any one of claims 1 to 11.
